# EUROPEAN PATENT SPECIFICATION

(11) **EP 2 783 841 B1**
(45) Date of publication and mention of the grant of the patent: **19.10.2016**
(21) Application number: 14161117.8
(22) Date of filing: 21.03.2014
(51) Int. Cl.: B29D 28/00, B60R 19/52

(54) **Method of manufacturing a mesh structure and mesh structure**
Verfahren zur Herstellung einer Netzstruktur und Netzstruktur
Méthode de fabrication de structure maillée et structure maillée

(30) Priority: 26.03.2013 GB 201305507
(43) Date of publication of application: 01.10.2014
(73) Proprietor: Crompton Technology Group Limited, Solihull, West Midlands B90 4LA (GB)
(72) Inventor: Marano, Emanuele, Oxford, OX3 0TX (GB)
(74) Representative: Leckey, David Herbert

(56) References cited:
- US-A- 4 028 460
- US-A- 4 137 354
- US-A- 5 074 950

## Description

### TECHNICAL FIELD

The present disclosure relates to a mesh structure and more particularly to a method of manufacturing a mesh structure.

### BACKGROUND

Mesh structures are used in a wide variety of applications. For example, certain applications require a high strength mesh. An example of such an application is a radiator guard which prevents debris entering an air intakes on a motor vehicle, for particularly a racing motor vehicle. However, many other applications also require a lightweight, strong mesh structure.

Present high strength mesh designs tend to use a metal mesh which is laminated with a carbon composite frame. However, this is not ideal, as the mesh can be heavy and subject to corrosion. Moreover, there is also the possibility that the mesh may delaminate, with the metal mesh pulling away from the surrounding frame.

It would be desirable to provide a mesh structure and mesh manufacturing method which address at least some of the above problems.

A mesh structure having the features of the preamble of claim 1 is disclosed in US-4137354.

### SUMMARY

The present invention provides a method of manufacturing a mesh structure in accordance with claim 1.

Thus in accordance with this disclosure, fibres forming a frame and mesh are commonly supported and secured on a substrate during manufacture. The support substrate is removed after the fibres (which may either be pre-impregnated with a resin or impregnated after they have been secured to the substrate) are at least partially cured. This allows an integrated fibre mesh structure to be created without laminating together separately created components. In effect, the frame and mesh fibres are created together on the substrate and secured to the substrate to facilitate their subsequent handling and to provide a highly integrated structure.

The respective fibre or fibres may be secured on the substrate in any convenient manner which prevents or limits their movement during the manufacturing process. In one example, the fibre or fibres are stitched to the substrate. This may locate the fibre or fibres accurately on the substrate and restrict their relative movement during the process.

The stitching thread used may be the same as, or different from, the fibre or fibres employed to make the frame and/or the mesh.

Of course, other forms of attachment may be used, but it is thought that stitching may be advantageous in that may provide improved joining of the mesh fibre or fibres at their points of intersection.

The support substrate is removed from the frame and mesh after the at least partial curing of the resin. As this may leave traces of the substrate attached to the mesh structure and may inadvertently damage the mesh structure, the substrate is removed chemically by being dissolved. According, the support substrate is soluble, for example water soluble. An example material is polyvinyl alcohol, which is water soluble.

The mesh is formed by the fibre or fibres being laid down in a mesh pattern which comprises mesh elements extending across the frame and anchor portions which are integrated within the frame. The mesh pattern may be uniform or non-uniform.

For example certain areas of the mesh may have a greater or smaller mesh size than others.

The anchor portions in one example connect respective mesh elements to form a turn portion within the frame.

A turn portion may span several mesh elements in the finished structure such that adjacent mesh elements are not formed by immediately successive sections of fibre or fibres.

The turn portions may be configured to extend substantially parallel to the direction of the frame forming fibre or fibres. They may be located between adjacent turns of the frame forming fibres.

The turn portions may also be positioned at different spacings from an edge of the frame.

Sections of the frame and mesh may be laid down in sequence. For example, in one embodiment, the fibre or fibres may be laid down to form one or more complete frame layers, and the mesh fibre or fibres then laid down on top of the frame layer or layers in one or more layers.

In another example a first section of frame (for example an inner peripheral section) may be laid down first, then a section of mesh (for example a number of mesh elements whose anchor portions are to be retained in the section of frame laid down), then a second section of frame, then a second section of mesh, continuing until the complete mesh structure has been laid down. In this arrangement sections of frame and mesh are laid down in an alternating manner. However, the frame and mesh can be laid down in any suitable sequence.

Further fibre or fibres may be laid down on top of the mesh to form one or more further frame layers.

The frame and mesh forming fibres may be made from the same or different materials from one another. In one example, the fibres are the same such that the frame and mesh are of the same material.

In a particular example, a single continuous fibre is used to make both the frame and the mesh. However, different fibres may be used for different parts of the mesh structure. For example, the frame may be made from one fibre and the mesh from another. In another example, different parts of the mesh structure may be made from different fibres.

The respective fibres may be a fibre tow or tows each containing a plurality of fibres. For example a carbon fibre tow may comprise from 1000 to 24000 (1K-24K) fibres for example 1 K, 3K, 6K, 12K or 24K, each fibre having a diameter of from 1 to 10 microns. The fibres may be of the same diameter or different diameters.

The respective fibres in any particular tow may all be of the same material, but if desirable, for example to provide particular properties, fibres of different materials may be incorporated within a tow.

For a high strength mesh, typical materials may include carbon or carbon/graphite fibres, aramid fibres such as poly(p-phenylene-2,6-benzobisoxazole) (PBO Zylon^{®}) Poly-paraphenylene terephthalamide (Kevlar^{®}), *p*-phenylene terephtalamide (PpPTA) (Twaron^{®}), Technora^{®}, Nomex^{®}, PBO AS, PBO HM, liquid crystal polymer fibres such as Vectran^{®}, Ultra High Molecular Weight Polyethylene fibres (e.g. Dyneema^{®} and Spectra^{®}) glass fibres and polyester fibres. The fibres may be twisted or untwisted.

The fibre or fibres may also be or incorporate a metallic fibre, for example if the mesh structure is required to be electrically conductive. Other non- synthetic fibres may also be used if appropriate.

It will be appreciated that the disclosure also extends to a fibre reinforced mesh structure comprising a frame and a mesh bounded by the frame, wherein the frame and mesh are formed integrally with one another.

### BRIEF DESCRIPTION OF DRAWINGS

One or more non-limiting embodiments will now be described with reference to the accompanying drawings in which:
Figure 1 illustrates an exemplary mesh structure;
Figure 2 illustrates a stage in the manufacture of the mesh structure of Figure 1;
Figure 3 illustrates a further stage in the manufacture of the mesh structure of Figure 1; and
Figure 4 illustrates schematically a pattern of fibres laid down in a manufacturing process.

### DETAILED DESCRIPTION

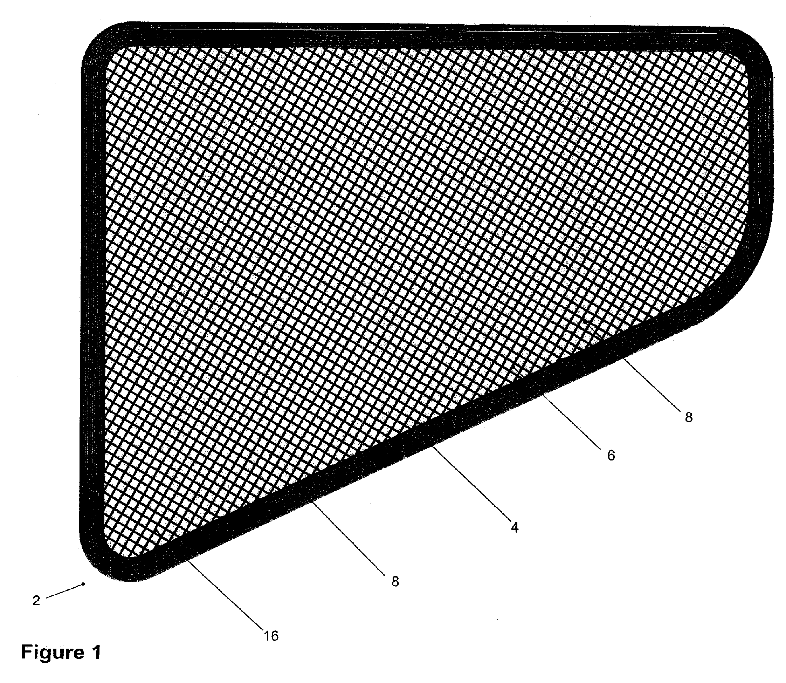

Figure 1 illustrates an exemplary fibre reinforced mesh structure 2 having a frame 4 and a mesh 6 bounded by the frame 4. As will be described further below, the frame 4 and mesh 6 are formed integrally. The frame 4 and mesh 6 are formed by one or more fibres 8, impregnated with resin and cured to form an integral structure 2.

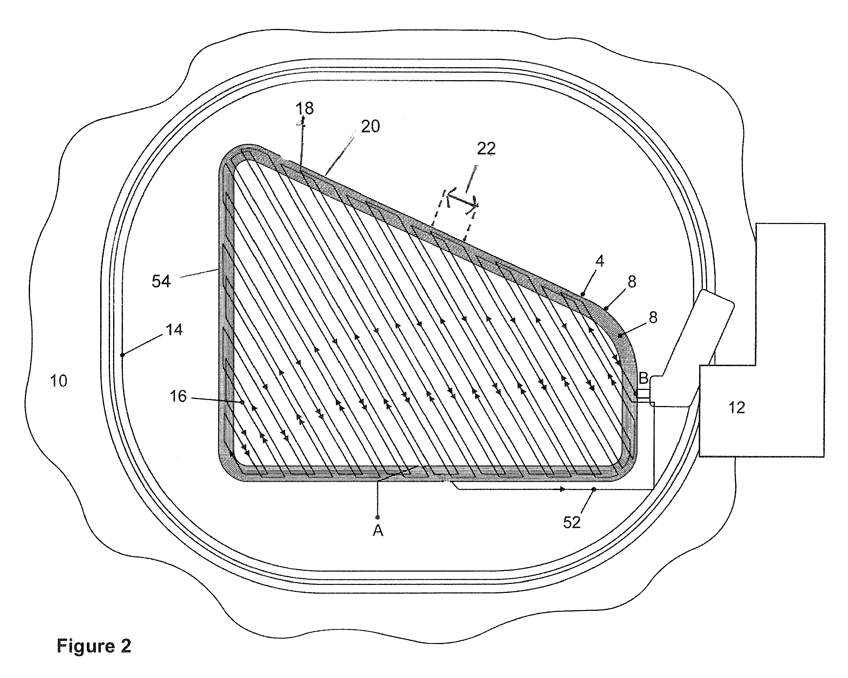

With reference to Figures 2 to 4, the mesh structure 2 is formed on a support substrate 10. In this embodiment, the support substrate 10 is a polymeric material, more particularly a soluble polymeric material, for example polyvinyl alcohol.

The fibre or fibres 8 are laid down and secured to the support substrate 10 in a predetermined pattern. In the disclosed embodiment, the fibre or fibres 8 are stitched to the support substrate 10 by means of a sewing machine 12 (illustrated schematically) e.g. a Tajima Carbon Laying Machine TLMX101. This machine 12 may be computer controlled, with the deposition path of the fibre or fibres 8 being suitably programmed into the machine 12. The support substrate 10 is itself supported taut by means of a frame 14.

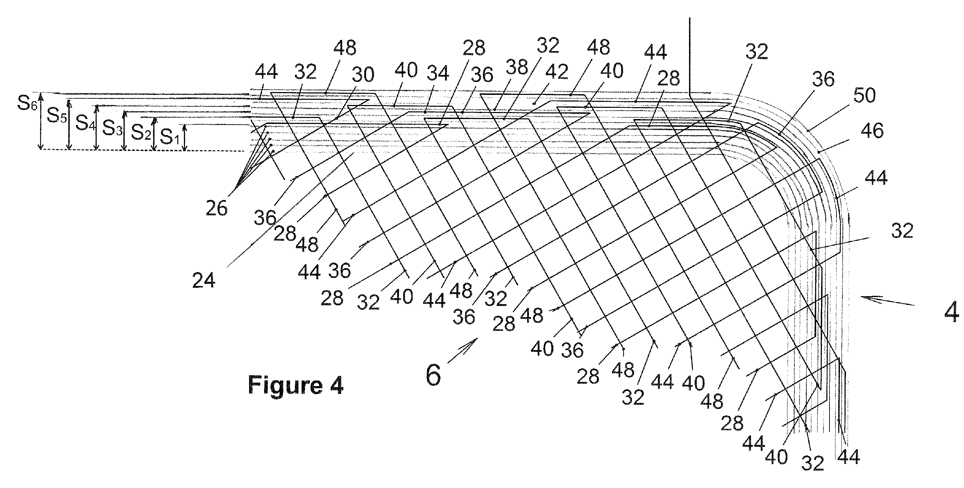

The fibre or fibres 8 are laid down in such a manner that the mesh 6 is integrated with the frame 4. As can be best seen from Figures 2 and 4, the frame 4 is formed by a plurality of turns of fibre 8. In this particular example, there are 11 turns of fibre 8 forming the frame 4, but this is not limiting and the number of turns may be varied to suit the particular size of frame 4 being manufactured. The frame 4 may comprise one or more layers of fibres.

The mesh 6 is formed by fibre or fibres 8 laid down in a mesh pattern on top of the frame 4. The mesh 6 comprises mesh elements 16 which extend across the frame 4 and anchor portions 18 integrated with the frame 4. The anchor portions 18 in this embodiment connect respective mesh elements 16 to form turn portions 20 within the frame 4. The turn portions 20 extend along the frame 4 and have a length 22 which extends substantially parallel to the direction of the frame fibre or fibres 8. The respective mesh elements 16 connected by a turn portion 20 are not adjacent one another in the final mesh structure 2, but are separated by other mesh elements 16 connected by different turn portions 20. The lengths 22 provide for improved integration with frame 4.

In this embodiment, the turn portion lengths 22 are generally located between adjacent turns of the frame fibre or fibres 8 and are arranged at different spacings S₁, S₂, S₃, S₄, S₅, S₆ from an inner edge 24 of the frame 4. This may be advantageous in that it spreads the anchoring locations over the width of the frame 4, thereby reducing the possibility of stress concentrations at any particular widthwise location in the event that, for example, the mesh 6 suffers an impact which would tend to pull the mesh elements 16 out of the frame 4.

The mesh forming fibre or fibres 8 may be laid down in runs to form groups of mesh elements 16 whose anchor portions 18 are located at the same width wise position within the frame 4. For example in Figure 2, which shows a first group of mesh elements 16 being laid down in a first run (illustrated by a single arrow on respective elements 16) and a second group of mesh elements 16 being laid down in a second run, illustrated by double arrows. Thus in this example, there may be six runs, three to produce mesh elements 16 extending in a first diagonal direction and three to produce mesh elements 16 extending in a second diagonal direction.

In this embodiment, the fibre or fibres 8 forming mesh elements 16 are shown as being laid down on top a fully formed frame 4, i.e. the frame 4 and the mesh 6 are formed sequentially. For example, as shown in Figure 4, , eleven turns 26, 30, 34, 38, 42, 46, 50 forming the frame 4 are laid down first and then successive groups 28, 32, 36, 40, 44, 48 of mesh element forming fibres 8 laid down and stitched on top of the frame 4.

However, that is not essential, and sections of the frame 4 and mesh 6 can be laid down at the same time. For example with reference to Figure 4, the structure could be laid down in multiple stages. In a first stage, the first five turns 26 of frame fibres 8 may be laid down, then a first group 28 of mesh element forming fibres 8 then a sixth turn 30 of frame fibre or fibres 8, then a second group 32 of mesh element forming fibres 8, then a seventh turn 34 of frame fibre or fibres 8, then a third group 36 of mesh element forming fibres 8, then an eighth turn 38 of frame fibre or fibres 8, then a fourth group 40 of mesh element forming fibres 8 then a ninth turn 42 of frame fibre or fibres 8, then a fifth group 44 of mesh element forming fibres 8, then a tenth turn 46 of frame fibre or fibres 8, then a sixth group 48 of mesh element forming fibres 8 then an eleventh turn 50 of frame fibre or fibres 8.

Of course, depending on the deposition path chosen, the respective groups of mesh element forming fibres 8 may be laid down in another order. Thus the above are just examples of possible lay out sequences and should not be regarded as limiting the disclosure.

Once the mesh 6 has been laid down, a further layer or layers of frame forming fibre or fibres 8 may be secured, i.e. in this embodiment stitched, over the mesh 6 to further strengthen the mesh structure 2.

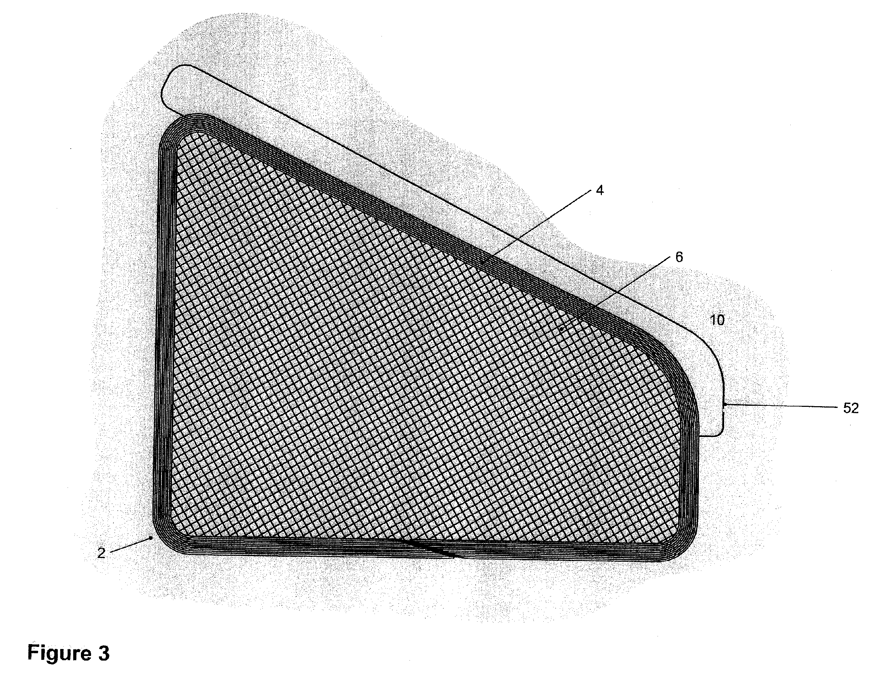

In the illustrated embodiment, the frame 4 and mesh 6 are formed from the same fibres 8. In a particular arrangement, a single continuous fibre 8 may be used. In the arrangement of Figure 2, the fibre 8 is continuous from a starting point A to a point B. As can be seen from Figures 2 and 3, the fibre 8 may have portions 52 extending outside the frame 4 to facilitate the continuous laying down of the pattern. These portions 52 will be removed in the final mesh structure 2. This is not limiting, however, and the frame 4 and mesh 6 may be laid down with multiple and /or different fibres 8.

It will be appreciated that the stitching of the fibre or fibres 8 to the substrate 10 not only locates the fibre or fibres 8 on the substrate 10 but also strengthens the intersections 54 between the mesh elements 16 and also the anchoring of the anchor portions 18 in the frame 4 as the stitching will not only penetrate the substrate 10 but also any underlying fibre or fibres 8.

The thread used in the stitching process may be of the same material as the fibre or fibres 8 and may contribute to the strength of the mesh elements 16.

The fibre material and size will be chosen depending on the particular application. In the embodiment illustrated, the fibre 8 used for the frame and the mesh is a fibre tow comprising about 6000 untwisted carbon filaments. Each filament has a diameter of 5 µm and has a linear weight of 223 tex and a density of 1.81 g/cm³. Of course this is purely exemplary and the fibre may be or may incorporate other materials, with a different number of filaments, filament weight and density. Examples of materials which may be used have been given above.

Once the frame 4 and mesh 6 fibres 8 have been stitched in place on the support substrate 10, the intermediate frame structure so formed is impregnated with resin, for example an epoxy resin. The particular resin used will be determined by the intended application and/or mesh properties. Suitable resins will be known to the skilled person and may include thermoset or thermoplastic resins.

The impregnation may take place by any suitable method. Normally this occurs under pressure to force the resin into the fibres 8. It might be thought that the stitching might in some way interfere with the impregnation process. However, as the stitching only attaches the fibre 8 to the support substrate at spaced locations, resin will be able to penetrate between the substrate 10 and the fibre 8 allowing full impregnation of the fibre 8.

After impregnation, excess resin may be removed, for example using a peel-ply material. This is desirable as any excess resin may, after curing, act to block mesh openings.

The intermediate frame structure may then be exposed to vacuum and compression within a vacuum bag to cause the resin to penetrate deeply into the fibres and remove voids from the resin and fibres 8.

After the resin has been adequately impregnated into the fibres 8, the intermediate structure can then be at least partially cured, possibly while still in a vacuum bag, should the structure have been subjected to a vacuum compression step as above. The partial curing partially sets the resin to make the intermediate structure sufficiently rigid to allow it to be handled for subsequent processing. A partially cured structure is illustrated in Figure 3. Suitable curing temperatures and durations will be known to the skilled person, but one example would be a cure for 1 hour at 80°C

After the curing, the intermediate structure is treated with a water solution to dissolve away the support substrate 10 leaving an impregnated mesh structure 2 free of obstructions in the regions between the mesh elements 16. That structure 2 may then be subjected to a final curing process to produce a final mesh structure 2.

Of course, should the support substrate 10 be made of a material which is capable of withstanding the normal curing temperature of the resin used in the impregnation step, the structure may be cured in a one step process, and the support substrate 10 dissolved after that.

Of course after curing, the mesh structure 2 may be subjected to finishing processes as appropriate, for example trimming excess fibres 52, and so on.

The laying down of the fibre or fibres 8 on a removable substrate 10 in accordance with the disclosure produces a highly integrated frame and mesh structure. The integration of the anchor portions 18 of the mesh elements 16 within the frame 4 reduces the likelihood of the mesh elements being pulled out from the frame in the event of an impact. Moreover, the strong intersections between mesh elements reduces the likelihood of mesh deformation under impact.

The illustrated example shows the mesh structure as being flat. However, the disclosure is not limited to such and the mesh may take a 3 dimensional shape. This may be achieved by, for example providing a 3 dimensional substrate 10 or by manipulation of the stitched intermediate structure into a 3 dimensional shape, for example by laying over a suitably shaped mould or form before curing. The latter may be preferable as it allows the stitching to take place on a planar substrate 10.

Also, while the mesh 6 illustrated is a regular mesh having straight, parallel mesh elements 16 with uniform mesh openings, that is not limiting. The mesh may be irregular in shape in terms of mesh element disposition and/or mesh size. Thus for example a mesh 6 having a non-uniform mesh opening density may be provided for aesthetic, technical or other reasons. The particular shape of the frame 4 and mesh 6 can be chosen to suit any particular application.

While the mesh structure disclosed may be suitable for high strength applications, it is also suitable for other applications, for example filtering, conduiting and so on.

It would also be possible to incorporate mountings for the mesh structure within the frame. For example one or more bolt holes may be formed in the frame. Alternatively, other fixings may also be stitched onto the frame.

In addition, as an alternative to impregnating the fibres 8 after they have been attached to the substrate 10, the fibres 8 may be pre-impregnated with a suitable resin prior to laying down on the substrate 10, in which case a further impregnation step will or may not be required. The machine 12 would, in that case be laying down pre-impregnated fibres. It is also envisioned within the scope of the invention to provide a mixture of pre-impregnated and un-impregnated fibres 8 and impregnate some or all the fibres 8 on the substrate 10 as necessary.

Thus it will be understood that the description above is a description of a non-limiting embodiment and that various changes and modifications may be made from the arrangement shown without departing from the scope of the disclosure which is set forth in the accompanying claims.

## Claims

1. A method of manufacturing a mesh structure (2), comprising:
securing one or more fibres (8) on a support substrate (10) to form a frame (4) and a mesh (6) bounded by the frame (4);
impregnating said fibre or fibres (8) with a resin, and/or providing said fibre or fibres (8) pre-impregnated with a resin;
at least partially curing said resin;
and removing said support substrate (10); **characterised in that**:
the support substrate (10) is soluble and is removed by being dissolved.

2. A method as claimed in claim 1 wherein the respective fibre or fibres (8) are secured on the support substrate (10) by stitching

3. A method as claimed in claim 1 or 2 wherein the support structure is dissolved in water

4. A method as claimed in any preceding claim wherein the mesh (6) is formed by the fibre or fibres (8) being laid down in a mesh pattern which comprises mesh elements (16) extending across the frame (4) and anchor portions (18) which are integrated within the frame (4).

5. A method as claimed in claim 4 wherein the anchor portions (18) connect respective mesh elements (16) to form a turn portion (20) within the frame (4).

6. A method as claimed in claim 5 wherein a turn portion (20) spans several mesh elements (16) in the finished mesh structure (2) such that adjacent mesh elements (16) are not formed by immediately successive sections of fibre or fibres (8).

7. A method as claimed in claim 5 or 6 wherein the turn portion (20) extend substantially parallel to the direction of the frame (4) forming fibre or fibres (8), optionally being located between adjacent turns of the frame (4) forming fibre or fibres (8).

8. A method as claimed in any of claims 5 to 7 wherein respective turn portions (20) are positioned at different spacings from an edge (24) of the frame (4).

9. A method as claimed in any preceding wherein the frame (4) and mesh (6), or sections thereof, are laid down in sequence

10. A method as claimed in any preceding claim wherein one or more layers of frame (4) are laid down and one or more layers of mesh (6) then laid down on the layer or layers of frame (4).

11. A method as claimed in any preceding claim wherein fibre or fibres (8) are laid down on top of the mesh (6) to form an additional frame layer.

12. A method as claimed in any preceding claim wherein the frame (4) and mesh (6) forming fibre or fibres are of the same material, for example the frame (4) and mesh (6) being formed from single continuous fibre (8)

13. A method as claimed in any preceding claim wherein the fibre or fibres (8) are fibre tow or tows each containing a plurality of fibres.

14. A method as claimed in any preceding claim wherein the fibre or fibres (8) is or comprises one or more fibres chosen from the group containing: carbon fibres, carbon/graphite fibres, aramid fibres, liquid crystal polymer fibres, Ultra High Molecular Weight Polyethylene fibres, polyester fibres, glass fibres and metallic fibres.

## Patentansprüche

1. Verfahren zur Herstellung einer Netzstruktur (2), umfassend:
Sichern von einer oder mehreren Fasern (8) auf einem Stützsubstrat (10), um einen Rahmen (4) und ein Netz (6), das durch den Rahmen (4) begrenzt wird, zu bilden;
Imprägnieren der Faser oder Fasern (8) mit einem Harz und/oder Bereitstellen der Faser oder Fasern (8), die mit einem Harz vorimprägniert sind;
zumindest teilweise Aushärten des Harzes;
und Entfernen des Stützsubstrats (10); **dadurch gekennzeichnet, dass**:
das Stützsubstrat (10) löslich ist und durch Auflösen entfernt wird.

2. Verfahren nach Anspruch 1, wobei die entsprechende(n) Faser oder Fasern (8) durch Nähen an dem Stützsubstrat (10) gesichert werden.

3. Verfahren nach Anspruch 1 oder 2, wobei die Stützstruktur in Wasser aufgelöst wird.

4. Verfahren nach einem der vorstehenden Ansprüche, wobei das Netz (6) dadurch gebildet wird, dass die Faser oder Fasern (8) in einem Netzmuster angeordnet werden, das Netzelemente (16), die über den Rahmen (4) hinaus gehen, und Ankerteile (18), die innerhalb des Rahmens (4) integriert sind, umfasst.

5. Verfahren nach Anspruch 4, wobei die Ankerteile (18) jeweilige Netzelemente (16) verbinden, um einen Wendeteil (20) innerhalb des Rahmens (4) zu bilden.

6. Verfahren nach Anspruch 5, wobei ein Wendeteil (20) mehrere Netzelemente (16) in der fertigen Netzstruktur (2) überspannt, so dass benachbarte Netzelemente (16) nicht durch unmittelbar aufeinander folgende Abschnitte von der Faser oder den Fasern (8) gebildet werden.

7. Verfahren nach Anspruch 5 oder 6, wobei der Wendeteil (20) im Wesentlichen parallel zur Richtung der den Rahmen (4) bildenden Faser oder Fasern (8) verläuft, optional angeordnet zwischen benachbarten Wenden der den Rahmen (4) bildenden Faser oder Fasern (8).

8. Verfahren nach einem der Ansprüche 5 bis 7, wobei entsprechende Wendeteile (20) in verschiedenen Abständen zu einer Kante (24) des Rahmens (4) positioniert werden.

9. Verfahren nach einem der vorstehenden Ansprüche, wobei der Rahmen (4) und das Netz (6) oder Abschnitte davon in Folge angeordnet werden.

10. Verfahren nach einem der vorstehenden Ansprüche, wobei eine oder mehrere Schichten des Rahmens (4) angeordnet werden und eine oder mehr Schichten des Netzes (6) dann auf der Schicht oder den Schichten des Rahmens (4) angeordnet werden.

11. Verfahren nach einem der vorstehenden Ansprüche, wobei die Faser oder Fasern (8) oben auf dem Netz (6) angeordnet werden, um eine zusätzliche Rahmenschicht zu bilden.

12. Verfahren nach einem der vorstehenden Ansprüche, wobei die den Rahmen (4) und das Netz (6) bildenden Fasern aus dem gleichen Material sind, indem zum Beispiel der Rahmen (4) und das Netz (6) aus einzelner Endlosfaser (8) gebildet werden.

13. Verfahren nach einem der vorstehenden Ansprüche, wobei die Faser oder Fasern (8) Faserkabel sind, die jeweils eine Vielzahl von Fasern enthalten.

14. Verfahren nach einem der vorstehenden Ansprüche, wobei die Faser oder Fasern (8) eine oder mehrere Fasern sind oder umfassen, ausgewählt aus der Gruppe umfassend: Kohlenstofffasern, Kohlenstoff-/Graphitfasern, Aramidfasern, Flüssigkristallpolymerfasern, Fasern aus Polyethylen mit ultrahohem Molekulargewicht, Polyesterfasern, Glasfasern und Metallfasern.

## Revendications

1. Procédé de fabrication d'une structure maillée (2), comprenant :
la fixation d'une ou de plusieurs fibres (8) sur un substrat de support (10) pour former un cadre (4) et une maille (6) délimitée par le cadre (4) ;
l'imprégnation de ladite fibre ou desdites fibres (8) avec une résine, et/ou la fourniture de ladite fibre ou desdites fibres (8) pré-imprégnées avec une résine ;
le durcissement au moins partiel de ladite résine ;
et le retrait dudit substrat de support (10) ;
**caractérisé en ce que** :
le substrat de support (10) est soluble et est retiré en étant dissous.

2. Procédé selon la revendication 1, dans lequel la fibre ou les fibres (8) respectives sont fixées sur le substrat de support (10) par couture.

3. Procédé selon la revendication 1 ou 2, dans lequel la structure de support est dissoute dans de l'eau.

4. Procédé selon une quelconque revendication précédente, dans lequel la maille (6) est formée par la fixation de la fibre ou des fibres (8) selon un motif de maille qui comprend des éléments de maille (16) s'étendant à travers le cadre (4) et des parties d'ancrage (18) qui sont intégrées au cadre (4).

5. Procédé selon la revendication 4, dans lequel les parties d'ancrage (18) relient des éléments de maille (16) respectifs pour former une partie de virage (20) au sein du cadre (4).

6. Procédé selon la revendication 5, dans lequel une partie de virage (20) enjambe plusieurs éléments de maille (16) dans la structure de maille (2) finie de sorte que des éléments de maille (16) adjacents ne sont pas formés par des sections immédiatement successives de fibre ou de fibres (8).

7. Procédé selon la revendication 5 ou 6, dans lequel la partie de virage (20) s'étend de manière sensiblement parallèle à la direction de la fibre ou des fibres (8) formant le cadre (4), facultativement en étant située entre des virages adjacents de la fibre ou des fibres (8) formant le cadre (4).

8. Procédé selon l'une quelconque des revendications 5 à 7, dans lequel des parties de virage (20) respectives sont positionnées à différents espacements par rapport à un bord (24) du cadre (4).

9. Procédé selon une quelconque revendication précédente, dans lequel le cadre (4) et la maille (6), ou des sections de ceux-ci, sont fixés en séquence.

10. Procédé selon une quelconque revendication précédente, dans lequel une ou plusieurs couches de cadre (4) sont fixées et une ou plusieurs couches de maille (6) sont ensuite fixées sur la couche ou les couches de cadre (4).

11. Procédé selon une quelconque revendication précédente, dans lequel une fibre ou des fibres (8) sont fixées au sommet de la maille (6) pour former une couche de cadre supplémentaire.

12. Procédé selon une quelconque revendication précédente, dans lequel la fibre ou les fibres formant le cadre (4) et la maille (6) sont composées du même matériau, par exemple le cadre (4) et la maille (6) sont formés à partir d'une unique fibre continue (8).

13. Procédé selon une quelconque revendication précédente, dans lequel la fibre ou les fibres (8) sont un faisceau ou des faisceaux de fibres contenant chacun une pluralité de fibres.

14. Procédé selon une quelconque revendication précédente, dans lequel la fibre ou les fibres (8) sont ou comprennent une ou plusieurs fibres choisies dans le groupe contenant : les fibres de carbone, les fibres de carbone/graphite, les fibres aramides, les fibres de polymère de cristaux liquides, les fibres de polyéthylène de poids moléculaire ultra-élevé, les fibres de polyester, les fibres de verre et les fibres métalliques.
